**Europäisches Patentamt**

**European Patent Office**

**Office européen des brevets**

(11) Veröffentlichungsnummer: **0 064 766**

**A2**

## (12) EUROPÄISCHE PATENTANMELDUNG

(21) Anmeldenummer: **82104089.6**

(22) Anmeldetag: **11.05.82**

(51) Int. Cl.³: **B 23 B 1/00**

(30) Priorität: **13.05.81 BG 52056/81**

(43) Veröffentlichungstag der Anmeldung:
**17.11.82 Patentblatt 82/46**

(84) Benannte Vertragsstaaten:
**BE CH DE FR GB IT LI NL SE**

(71) Anmelder: **DSO "SAVODI sa METALOREJESCHTI MASCHINI"**
**Iliensko Chaussée 8**
**Sofia(BG)**

(72) Erfinder: **Blagov, Jontscho Jontschev, Dipl.-Ing.**
**Proletarij-Strasse Block 20-3**
**Sofia(BG)**

(72) Erfinder: **Dimitrov, Ljuben Krumov, Dipl.-Ing.**
**Daskal Manol-Strasse 7a**
**Sofia(BG)**

(72) Erfinder: **Bundjulov, Petko Metodiev**
**Komplex Krasno Selo Block 5-3**
**Sofia(BG)**

(74) Vertreter: **Finck, Dieter et al,**
**Patentanwälte v. Füner, Strehl Schübel-Hopf,**
**Ebbinghaus, Finck Mariahilfplatz 2 & 3**
**D-8000 München 90(DE)**

(54) **Verfahren und Vorrichtung für die Bearbeitung von rotationssymmetrischen Werkstücken.**

(57) Für die Bearbeitung von rotationssymmetrischen Werkstücken aus einzelnen Rohlingen oder aus Stangenmaterial wird zuerst die eine Seite des an die Spindel der Werkzeugmaschine befestigten Werkstücks bearbeitet, danach wird in einer zweiten Arbeitsposition die andere Werkstückseite bearbeitet. Dabei nähert sich die Einspannvorrichtung (12) der rechten Spindel (9) dem Werkstück (4) gleichachsig zur linken Spindel (3). Das Werkstück (4) wird gefaßt und in eine zweite Arbeitsposition versetzt, die gleichachsig zur ersten ist, wo eine gleichwertige Bearbeitung der anderen Seite des Werkstücks (4) gleichachsig zu der Bearbeitung eines neuen Werkstücks (4) auf der linken Spindel (3) ausgeführt wird. Die dafür eingesetzte Vorrichtung hat ein Gestell, auf dem auf der gleichen Achse ein linkes Spindelgehäuse 2 und ein rechtes Spindelgehäuse 10 montiert sind. Im linken Spindelgehäuse 2 ist eine linke Spindel 3 gelagert. Durch die linke Spindel 3 wird das Stangenmaterial 1 durch einen Zuführungsmechanismus zugeführt. Im rechten Spindelgehäuse 10 ist eine rechte Spindel 9 gelagert. Daran ist durch eine axial bewegliche Pinole 11, die in einem bestimmten Abstand von der Einspannvorrichtung 12 der linken Spindel 3 angeordnet ist, eine Einspannvorrichtung 12 befestigt. Zwischen dem linken und dem rechten Spindelgehäuse 2 und 10 sind ein hinterer Mehrwerkzeugsupport 5 und ein vorderer Mehrwerkzeugsupport 6 angeordnet.

PATENTANWÄLTE

SCHIFF v. FÜNER STREHL SCHÜBEL-HOPF EBBINGHAUS FINCK

MARIAHILFPLATZ 2 & 3, MÜNCHEN 90
POSTADRESSE: POSTFACH 95 01 60, D-8000 MÜNCHEN 95

ALSO PROFESSIONAL REPRESENTATIVES
BEFORE THE EUROPEAN PATENT OFFICE

KARL LUDWIG SCHIFF (1964–1978)
DIPL. CHEM. DR. ALEXANDER v. FÜNER
DIPL. ING. PETER STREHL
DIPL. CHEM. DR. URSULA SCHÜBEL-HOPF
DIPL. ING. DIETER EBBINGHAUS
DR. ING. DIETER FINCK

TELEFON (089) 48 20 54
TELEX 5-23 565 AURO D
TELEGRAMME AUROMARCPAT MÜNCHEN

—1—

EPA - 22 782

## Verfahren und Vorrichtung für die Bearbeitung von rotationssymmetrischen Werkstücken

Die Erfindung betrifft ein Verfahren für die Bearbeitung von rotationssymmetrischen Werkstücken, insbesondere für die zweiseitige gleichwertige mechanische Bearbeitung von zwei Werkstücken, gleichzeitig und aufeinanderfolgend für beide Seiten eines jeden Werkstücks sowie eine Einrichtung für die Durchführung des Verfahrens.

Bei einem bekannten Verfahren für die zweiseitige Bearbeitung von rotationssymmetrischen Werkstücken aus Stangenmaterial wird die eine Seite eines Werkstückes bearbeitet, das an einer ersten Spindel einer Werkzeugmaschine eingespannt ist. Nach der Beendigung der Bearbeitung der einen Seite wird das Werkstück von einer Einspannvorrichtung erfaßt, die an einer zweiten Spindel der Maschine montiert ist. Die Bearbeitung der zweiten Seite des Werkstücks erfolgt in einer anderen Arbeitsposition. Die Vorrichtung, mit der dieses Verfahren durchgeführt wird, hat zwei Trommeleinrichtungen mit Einspannvorrichtungen in zwei Arbeitspositionen, die entgegengesetzt und parallel zueinander angeordnet sind.

Das Übertragen des Werkstücks von der einen Trommeleinrichtung zu der anderen erfolgt in einer dazwischen liegenden dritten Position mit Hilfe einer Stangenzuführung (BG-PS 23 276).

Ein Nachteil des bekannten Verfahrens liegt darin, daß es nur für Werkstücke aus Stangenmaterial anwendbar ist, wobei das Übertragen des Werkstücks von der ersten zur zweiten Spindel der Maschine durch Ausstoßen des Stangenmaterials erfolgt. Das Verfahren ist nicht für die Bearbeitung von einzelnen Rohlingen geeignet. Die bekannte Vorrichtung hat den Nachteil, daß eine Stangenzuführung für Rohlinge aus Stangenmaterial erforderlich ist und in der relativen Unbeweglichkeit die eine Trommeleinrichtung in Bezug auf die andere bei der Bearbeitung von einzelnen Rohlingen relativ unbeweglich ist. Außerdem können komplizierte gleichwertige Bearbeitungsoperationen nicht in beiden Arbeitspositionen durchgeführt werden.

Der Erfindung liegt die Aufgabe zugrunde, ein Verfahren und eine Vorrichtung für die Bearbeitung von rotationssymmetrischen Werkstücken aus einzelnen Rohlingen oder aus Stangenmaterial zu schaffen, bei welchen eine in Bezug auf die Kompliziertheit gleichwertige Bearbeitung der beiden Seiten der Werkstücke möglich ist, ohne daß für das Übertragen des Werkstücks von der ersten Arbeitsposition in die zweite Hilfseinrichtungen benötigt werden.

Diese Aufgabe wird, ausgehend von einem Verfahren, bei dem ein Werkstück, das an die linke Spindel der Maschine befestigt ist, von der einen Seite bearbeitet wird, wonach das Werkstück von einer Einspannvorrichtung gefaßt wird, die an der rechten Spindel montiert ist, worauf die Bearbeitung der anderen Seite des Werkstücks in einer zweiten Arbeitsposition folgt, erfindungsgemäß dadurch gelöst, daß die Einspannvorrichtung der rechten Spindel näher zum Werkstück gebracht wird, und zwar gleichachsig zu der linken Spindel. Das Werkstück wird gefaßt und in die zweite Arbeitsposition überführt, die gleichachsig zu der ersten ist. Dort erfolgt die gleichwertige Bearbeitung der anderen Seite des Werkstücks, gleichzeitig mit der Bearbeitung eines neuen Werkstücks auf der linken Spindel.

Bei der Bearbeitung von Werkstücken aus Stangenmaterial zieht die Einspannvorrichtung der rechten Spindel das Werkstück und das Stangenmaterial zurück in Zwischenposition zum Abschneiden, wonach sie in die zweite Arbeitsposition versetzt werden.

Die Vorrichtung zur Durchführung des erfindungsgemäßen Verfahrens besteht aus einem Gestell mit zwei gleichwertigen Arbeitsspindeln, die in einer Achse in zwei Arbeitspositionen angeordnet sind. Die auf den Spindeln montierten Einspannvorrichtungen sind einander zugewendet, wobei mindestens eine von ihnen in Bezug auf die andere mit einem gemeinsamen axialen Hub axial beweglich ist, der gleich der Entfernung zwischen ihnen ist.

Die erfindungsgemäße Vorrichtung hat den Vorteil, daß das Übertragen eines Werkstücks von der einen Arbeitsposition in die andere nur durch an die Spindeln montierte Einspannvorrichtungen erfolgt, wodurch das Verfahren für die Bearbeitung von einzelnen Werkstücken vielseitiger wird und eine Stangenzuführung für Werkstücke aus Stangenmaterial nicht mehr erforderlich ist.

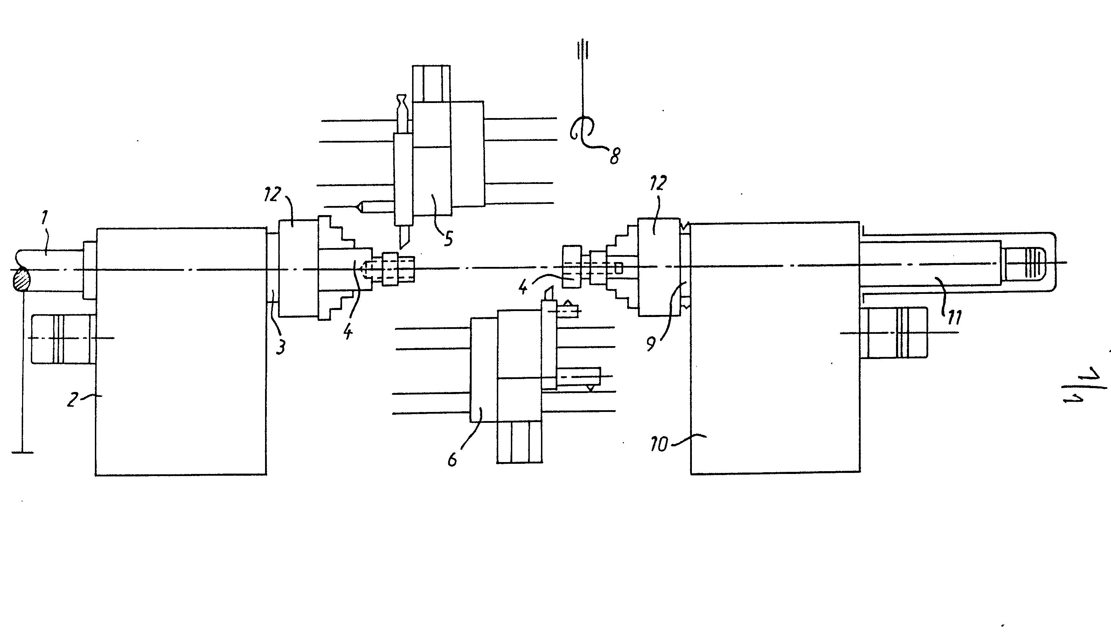

Anhand der Zeichnung, die schematisch ein Ausführungsbeispiel einer Vorrichtung für die Bearbeitung von rotationssymmetrischen Werkstücken zeigt, wird die Erfindung näher erläutert.

Die Vorrichtung für die Bearbeitung von rotationssymmetrischen Werkstücken ist als Dreh- und Abschneidmaschine gebaut. Sie besteht aus einem Gestell, das in der Zeichnung nicht gezeigt ist, auf dem auf der gleichen Achse ein linkes Spindelgehäuse 2 und ein rechtes Spindelgehäuse 10 montiert sind. Im linken Spindelgehäuse 2 ist eine linke Spindel 3 gelagert. Durch die linke Spindel 3 wird das

Stangenmaterial 1 durch einen bekannten Zuführungsmechanismus zugeführt. Im rechten Spindelgehäuse 10 ist eine rechte Spindel 9 in Form einer Pinoleneinheit gelagert. An der Spindel ist eine Einspannvorrichtung 12 durch eine axial bewegliche Pinole 11 befestigt, die in einem bestimmten Abstand von der Einspannvorrichtung 12 der linken Spindel 3 angeordnet ist. Zwischen dem linken und dem rechten Spindelgehäuse 2 und 10 sind ein hinterer Mehrwerkzeugsupport 5 und ein vorderer Mehrwerkzeugsupport 6 angeordnet. Die Vorrichtung ist mit einer mechanischen Hand 8 versehen, die aus bekannten Mechanismen besteht und an dem Gehäuse befestigt ist. Außerdem hat die Vorrichtung eine numerische Programmsteuerung.

Bei einer ersten Ausführungsvariante ist mindestens eine der Spindeln in Pinolenbauweise ausgeführt und axial beweglich in einem lagefesten Spindelkasten, der in der Zeichnung nicht gezeigt ist, angeordnet und in ein entsprechendes Spindelgehäuse eingebaut.

Bei einer zweiten Ausführungsvariante ist an die eine Spindel über eine Pinole, die in Bezug auf die Spindel axial beweglich ist, eine Einspannvorrichtung montiert.

Bei einer dritten Ausführungsvariante ist mindestens die eine Spindel in einem Spindelgehäuse angeordnet, das beweglich auf Führungen montiert ist.

Die Vorrichtung zur Bearbeitung rotationssymmetrischer Werkstücke arbeitet folgendermaßen:
Zuerst öffnen sich die Backen der Einspannvorrichtung 12 der linken Spindel 3 der ersten Arbeitsposition, während der Zuführungsmechanismus die erforderliche Länge des Stangenmaterials 1 zuführt. Dann wird das Stangenmaterial 1 zwischen den Backen der Einspannvorrichtung 12 eingespannt. Nach dem Einspannen des Stangenmaterials 1 wird der hintere Mehrwerkzeugsupport 5 in Betrieb gesetzt, der mit seinen Werkzeugen alle Außen- und Innenbearbeitungen der rechten Seite des Werkstücks 4 ausführt. Es folgt ein Versetzen der Pinole 11 nach links mit geöffneten Backen der Einspannvorrichtung 12,bis die Backen den bearbeiteten Zapfen umfassen, der für das Einlegen des Werkstücks 4 auf der rechten Spindel 9 vorgesehen ist. Das nächste Einspannen kann sowohl bei Stillstand beider Spindeln erfolgen, als auch bei gleicher Drehzahl in gleicher Drehrichtung. Nach dem Einspannen des Werkstücks 4 erfolgt das Abschneiden vom Stangenmaterial 1 durch ein Trennwerkzeug des hinteren Mehrwerkzeugsupports 5. Dann wird die Pinole 11 in die rechte Endstellung der zweiten Arbeitsposition zurückgefahren, wo die Werkzeuge des vorderen Werkzeugsupports 6 in Betrieb gesetzt werden. Sie führen die Bearbeitungen auf der linken Seite des Werkstücks 4 aus, während zu gleicher Zeit bei einem neuen Werkstück 4 auf der linken Spindel 3 die beschriebenen Bewegungen und Arbeitsgänge wiederholt werden. Nach Beendigung der Bearbeitung der linken Seite des Werkstücks 4 wird dieses von der mechanischen Hand 8 entfernt und auf eine Palette, ein Magazin oder einen Förderer in Nähe der Maschine übertragen.

ALSO PROFESSIONAL REPRESENTATIVES
BEFORE THE EUROPEAN PATENT OFFICE

KARL LUDWIG SCHIFF (1954–1978)
DIPL. CHEM. DR. ALEXANDER v. FÜNER
DIPL. ING. PETER STREHL
DIPL. CHEM. DR. URSULA SCHÜBEL-HOPF
DIPL. ING. DIETER EBBINGHAUS
DR. ING. DIETER FINCK

TELEFON (089) 48 20 54
TELEX 5-23 565 AURO D
TELEGRAMME AUROMARCPAT MÜNCHEN

– 6 –

EPA – 22 782

## PATENTANSPRÜCHE

1. Verfahren für die Bearbeitung von rotationssymmetrischen Werkstücken aus einzelnen Rohlingen oder aus Stangenmaterial, bei dem zuerst die eine Seite des an der Spindel der Werkzeugmaschine befestigten Werkstücks bearbeitet wird, wonach das Werkstück von einer an einer anderen Spindel montierten Einspannvorrichtung gefaßt wird und auf der anderen Seite in einer zweiten Arbeitsposition bearbeitet wird, dadurch g e k e n n z e i c h n e t , daß sich die Einspannvorrichtung (12) der rechten Spindel (9) dem Werkstück (4) gleichachsig zur linken Spindel (3) nähert, daß das Werkstück (4) gefaßt und in eine zweite Arbeitsposition versetzt wird, die gleichachsig zur ersten ist, wo eine gleichwertige Bearbeitung der anderen Seite des Werkstücks (4) ausgeführt wird, während gleichzeitig ein neues Werkstück (4) auf der linken Spindel (3) bearbeitet wird.

2. Verfahren nach Anspruch 1, dadurch g e k e n n

z e i c h n e t , daß bei der Bearbeitung von Werkstücken aus Stangenmaterial die Einspannvorrichtung (12) der rechten Spindel (9) das Werkstück (4) zusammen mit dem Material (1) in Zwischenposition zum Abschneiden zieht, wonach das Versetzen in zweiter Arbeitsposition erfolgt.

3. Vorrichtung zur Durchführung des Verfahrens nach Anspruch 1 oder 2, mit einem Gestell mit zwei gleichwertigen Arbeitsspindeln und Einspannvorrichtungen, die in zwei selbständigen Arbeitspositionen angeordnet sind, dadurch g e k e n n z e i c h n e t , daß die Arbeitspositionen auf einer gemeinsamen Achse liegen, und daß die Einspannvorrichtungen (12) einander zugewendet sind, wobei mindestens eine von ihnen in Bezug auf die andere axial beweglich ist und ihr gesamter axialer Hub gleich der Entfernung zwischen ihnen ist.

4. Vorrichtung nach Anspruch 3, dadurch g e k e n n - z e i c h n e t , daß mindestens eine der Spindeln (3,9) eine Pinole aufweist und axial beweglich in einem unbeweglichen Spindelkasten angeordnet ist.

5. Vorrichtung nach Anspruch 3, dadurch g e k e n n - z e i c h n e t , daß an der linken (3) oder rechten Spindel (9) eine Einspannvorrichtung (12) über eine Pinole (11) montiert ist, die in Bezug auf die linke (3) oder die rechte Spindel (9) axial beweglich ist.

6. Vorrichtung nach Anspruch 3, dadurch g e k e n n - z e i c h n e t , daß mindestens eine der Spindeln (3, 9) in einem Spindelkasten eingebaut ist, der auf Führungen beweglich montiert ist.

1/1